# EUROPEAN PATENT APPLICATION

(11) **EP 1 437 179 A1**
(43) Date of publication of application: **14.07.2004**
(21) Application number: 02794801.7
(22) Date of filing: 23.04.2002
(51) Int. Cl.: B05B 15/02, C03C 27/10

(54) **MACHINE FOR CLEANING NOZZLES USING PAPER**

(30) Priority: 17.08.2001 ES 200101925
(71) Applicant: ASM, S.A., 43206 Reus (ES)
(72) Inventor: MOYA GARCIA, Jose Julio, E-43206 Reus (ES)
(74) Representative: Urizar Anasagasti, José Antonio
(86) International application number: PCT/ES2002/000197
(87) International publication number: WO 2003/015933

(57) **Abstract**

The invention relates to a machine for cleaning injection nozzles which is mounted as an additional station in a glass gluing machine. The inventive nozzle cleaning machine can be mounted in a fixed or sliding manner in the machine assembly, depending on whether the nozzle is of the fixed or the sliding type. For cleaning purposses, the nozzle, which is covered with paper, is introduced intoa a penumatically-actuated clamping head. The nozzle is then rotated a series of times such that the putty or material on said nozzle is left on the strip of paper.

## Description

### OBJECT OF THE INVENTION

The object of the present invention is a machine for cleaning the nozzle that emits paste in machines for glass gluing. The machine of the invention is assembled as an additional station on said gluing machine. Cleaning is carried out when said injection nozzle is penetrated with a continuous strip of paper from a pneumatically controlled fixing head, and once said head has been activated, the nozzle carries out a series of turns and movements so that any leftover paste is deposited onto the continuous strip of paper which, from a roll at one end, circulates towards the other end of the station by way of the action of a motor at the end of each cleaning session.

### BACKGROUND OF THE INVENTION

Glass gluing machines include an application head by which the material comes out through a nozzle. Due to the viscosity of the application materials, after applying the material the nozzle needs periodical cleaning so that the applications have a uniform distribution and to avoid problems with dried glue blocking the nozzle.

There are currently two systems for carrying out this cleaning process:
1. High pressure air current cleaning system. Said system consists in introducing the material application head into a completely closed container in which the nozzle is situated beside vents which make air circulate at high pressure, thus removing the remains of any materials adhered to the nozzle; this cleaning system has the disadvantage, due to the air pressure itself, of spreading the remains of the material all around the container, and cannot guarantee the complete cleaning of the nozzle, as well as other inconveniences related to the maintenance and cleaning of the assembly.
2. Cleaning system with thread that cuts the material just under the nozzle. Said system consists of making the edge of the application nozzle pass just under a highly tensed steel thread, which cuts, as if it were a knife, the material stuck to the nozzle, part of this material staying adhered to the thread and the rest falling into a container located just under it, said thread being cleaned later by an arm which, moving across the top, cleans the remains of the material. This system, just as the previous one, does not guarantee complete cleaning because due to the thread vibrating when rubbing the nozzle, it does not clean it completely.

The system that is the object of the present invention is conceived based on trying to simulate the cleaning of the nozzle just as it would be done by hand, therefore a cleaning station whose main element is paper has been designed; a strip of continuous paper rolled up at one end and held onto a collection roll at the other end of the cleaning station penetrates together with and pushed by a fixation head into the nozzle, which is controlled pneumatically; once the head is holding the paper and the nozzle, the nozzle carries out a number of turns, thus leaving the paste or gluing material on the paper and thereby achieving the cleaning of the nozzle.

There are two ways of applying this paste: by a nozzle held on a fixed head or by a nozzle on a mobile head (on a robot). The cleaning station must be adapted to each type of applicator. Thus, in the first case the cleaning station must move to the nozzle, and in the second case the nozzle must move to the cleaning head.

### DESCRIPTION OF THE INVENTION

The present invention is a machine whose function is to clean the injection nozzle on glass gluing machines; due to the viscosity of the application materials, the nozzle needs periodical cleaning so that the distribution of the applications remains uniform. For this reason, a cleaning station whose functioning is most similar to that which would be carried out by hand has been developed.

On a plate of aluminium (1), held onto aluminium profiles (2), a roll of paper (3) is situated at one end, held by a central axis (4) which is articulated (5) at one end, said axis being moveable in ascending and descending directions within the plane perpendicular to the basis, thus facilitating fitting or removing the roll of paper (3), the other end of the axis (4) being fixed due to a lowered area (6) of said axis, a support (7) by way of a pressure gripping mechanism (8). This paper roll turns freely having as its only brake a wheel (9) which, by way of a spring, presses on the roll of paper, thus having a double function, working as a brake to maintain certain tension of the paper along all of its route, and to detect movement of the wheel by way of a fibre optic cable (10) connected to a photocell (11), thus determining lack of paper as the tensor wheel stops turning, in this case giving a warning signal in order for the roll of paper to be replaced.

Once said roll of paper (3) is fitted, the free end of it is passed over two pillars, (12) and (13), held to the aluminium base and joined by teflon cylindrical axes (14) and (15), thus forming a bridge, assembled on each end of the cleaning head and with a distance between them of from 270mm to 320mm, the necessary distance so that the paper is not torn when pressed by the injector nozzle and introduced into it by way of the cleaner head clasps (16) and (17).

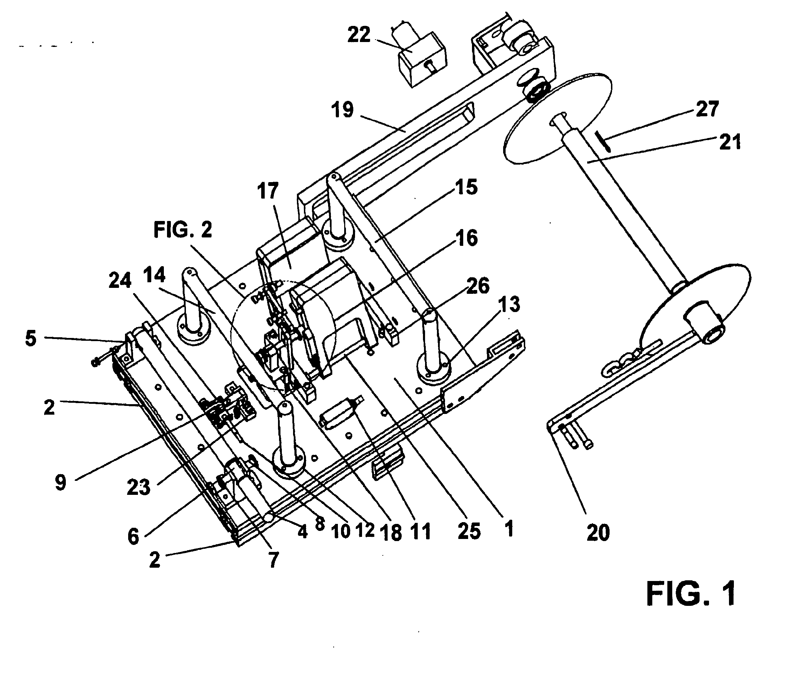

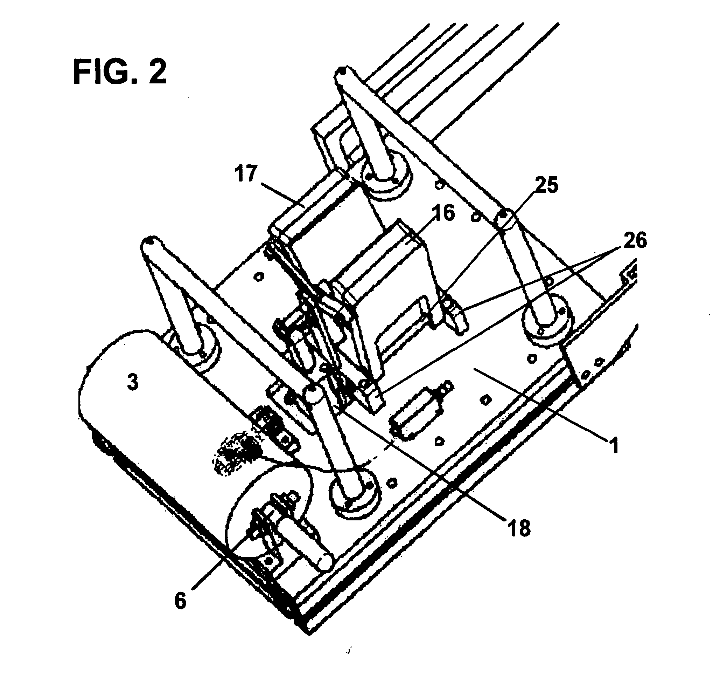

The injector head contacts with and penetrates, together with the paper, the cleaner head, located in the centre of the aluminium basis (1). Said cleaner head consists of two plates of aluminium (16) and (17); a piece of foam rubber, with a hardness of approximately 10 to 25 shore, has been adhered to the internal part of said plates, which is what is in contact with the paper and the injector nozzle; said plates are joined by way of a set of levers (see fig. 2), which, controlled by a pneumatic piston (18), make the plates of aluminium open and close, thus producing a movement similar to that of clasps opening and closing.

Once the paper and the injector nozzle are inside the plates, these plates close by way of a pneumatic piston (18), the plates pressing the paper and the nozzle with the foam rubber; once it is all clasped, the nozzle carries out a series of turns and the paste or glass gluing material is left adhered to the paper, thus leaving the nozzle clean along all of its perimeter; the plates (16) and (17) that hold the paper and the nozzle open by way of the pneumatic cylinder (18), freeing the nozzle and leaving the paste on the paper.

The nozzle is lifted when it is on a mobile head or the cleaning station lowers when the nozzle is on a fixed head. At the instant when the cleaned nozzle is freed from the cleaning plates and the paper, this nozzle, which is held at the other end of the basis (1) by arms (19) and (20) onto a collection roll (21) controlled by a geared motor (22) with an alternating current of 220 V, is moved lengthways by the turning of the roll activated by the motor, thus collection the soiled paper from the previous cleaning and leaving clean paper on the cleaning plates (16) and (17).

### DETAILED DESCRIPTION OF THE DRAWINGS

For an improved understanding of the object of the present invention, a preferred practical embodiment is disclosed below based on the attached figures.
- Figure 1:: General plan of the cleaning machine
- Figure 2:: Detail of levers and nozzle fixing plates

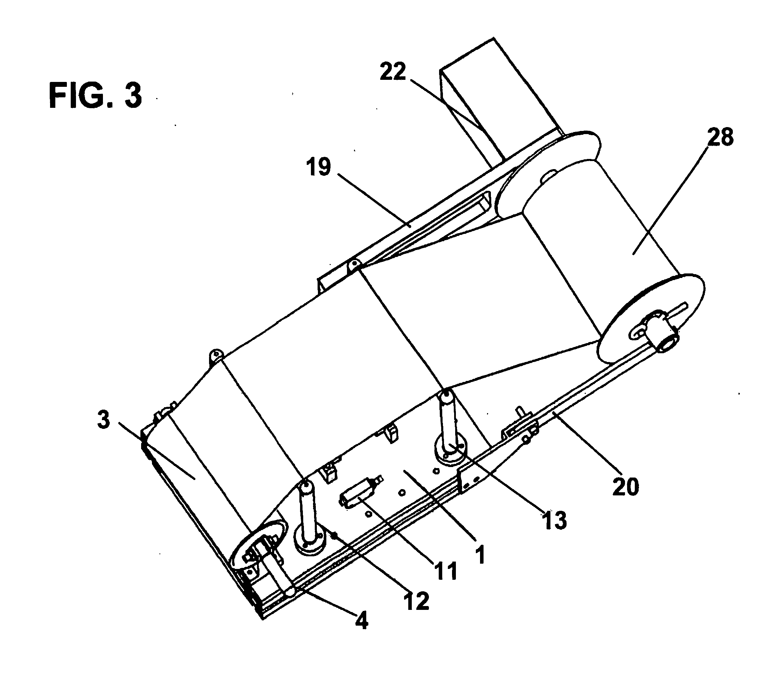

- Figure 3:: Plan of paper assembly

### PREFERRED EMBODIMENT OF THE INVENTION

The present invention is related to a machine for cleaning injection nozzles, which is to be assembled as an additional station on the machine whose purpose is glass gluing. This nozzle cleaning station can be fixed within the assembly of the machine or moveable, depending on whether the injection nozzle is fixed or moveable; the difference this makes for the cleaning station being simply that if the nozzle is fixed, the station will be held by a pneumatic piston whose function is to lift or lower the whole assembly following the program of functions of the machine assembly and in the case that the cleaning station is fixed, the injection nozzle is what moves to the station.

In both cases, the cleaning machine is assembled on an aluminium basis (1) held onto aluminium profiles (2). An axis (4) articulated at its tip (5) is assembled on one of the ends of this basis, holding the paper roll (3); this articulated axis is fixed at its other end to a support (7) which includes a pressure gripping mechanism (8), which prevents the axis from being lifted once it is set in working position, thus ensuring that the roll of paper (3) is always in its working position.

In order to ensure that at all times the cleaning station has paper available, a wheel (9) is assembled which, centred on its basis and beside the articulated axis, assembled on the support basis (23), presses on the paper by way of a spring, this wheel having a double purpose: on one hand, it presses the paper by way of the spring so that it is always tense along all of its route, and on the other, it checks the paper supply on the roll. When the paper advances it makes the wheel move; symetrical holes have been made in this wheel around its tyre, and, by way of a fibre optic cable (10) held to the support (24), which is connected to a photocell (11), the movement of the wheel is checked, thus verifying the paper supply on the roll. When the roll of paper runs out the photocell (11), since it does not detect wheel movement, emits an alarm signal for paper supply.

In the centre of the basis plate the main part of the cleaning station is located, formed by clasps (16) and (17), which must hold the nozzle, built of aluminium, which include, glued on their inner surfaces (that which is in contact with the nozzle), a piece of foam rubber with a hardness of about 10 to 25 shore, this foam rubber being what will hold the paper and the nozzle to be cleaned. The aluminium plates are held to the basis by an axis (25) and bars (26), that facilitate a back and forth movement of the clasps. On one of its sides a set of levers has been assembled, see detail in fig. 2, held onto a pneumatic piston (18), which, with the movement of the piston, make the clasps (16) and (17) carry out an opening and closing clamping movement.

The paper for cleaning the nozzle, once it has been set on its basis, is pulled at its free end, making it pass over teflon supports (14) and (15) which are held to the basis (1) by columns (12) and (13), so that the paper also goes over the top of the clasps (16) and (17), and is held at the other end by the collection roll (28).

Said collection roll is held (28) by arms (19) and (20) and turns controlled by a 220V motor (22). In order to remove the paper easily once finished, the support arm (20) can easily be dismounted, as can be seen in fig. 1, and the collection roll has been designed so that it can be easily dismounted. In order to hold the paper at the first turning and prevent it from slipping on the axis (21), a grip is included on said axis (27), holding the first turn of paper on the axis.

## Claims

1. Machine for cleaning adhesive paste from injector nozzles with paper in glass gluing machines, **characterised in that** it consists of:
a. a feeder assembly
b. a clasp assembly
c. a collection assembly

2. Machine for cleaning adhesive paste from injector nozzles with paper in glass gluing machines according to claim 1, **characterised in that** the feeder assembly is mounted on one end of an aluminium basis (1), which supports the whole machine, said feeder assembly including an axis (4), articulated at one end (5), said axis being moveable in ascending and descending directions within the plane perpendicular to the basis, the axis (4) holds the roll of paper (3), this articulated axis (4) being fixed at its opposite end onto a support (7) which has a pressure gripping mechanism (8) that prevents the axis, once situated in working position, from being lifted and thus ensuring that the roll of paper (3) is always in the desired working position, said feeder assembly also including a support basis (23) on which, in central position with respect to said basis (23) and beside the articulated axis, a wheel has been assembled, which presses on the paper by way of a spring so that the paper is always tense along all its route and as the paper advances the wheel (9) turns, said wheel (9) including symetrical holes around its tyre, and by way of a fibre optic cable (10), held to a support (24), which is connected to a photocell (11), the movement of the wheel is checked thus verifying the paper supply on the roll, the photocell (11) emitting an alarm signal when the paper supply runs out, when said photocell (11) stops detecting the movement of the wheel.

3. Machine for cleaning adhesive paste from injection nozzles in glass gluing machines according to claim 1, **characterised in that** the set of clasps (16) and (17) is assembled on the centre of the base plate (23) and has the purpose of holding the nozzle while it is cleaned, said claps being built of aluminium and lined inside with a layer of foam rubber with a hardness of approximately 10 to 25 shore, said aluminium plates being held to the basis by way of an axis (25) and bars (26), allowing the clasps to have a back and forth movement; a set of levers held onto a pneumatic piston (18) and mounted on one side of the clasps makes, due to the piston action, the clasps (16) and (17) have an opening and closing scissor movement.

4. Machine for cleaning adhesive paste from injection nozzles in glass gluing machines according to claim 1, **characterised in that** the collection assembly rolls the paper coming from the feeder assembly, which passes over teflon supports (14) and (15), which are held to the basis (1) by the columns (12) and (13) and which make the paper slide over them and over the clasps (16) and (17), said paper being held at the other end by the collection roll (28), which is held by the arms (19) and (20), and is activated by a 220 V motor (22); said roll is removed once the paper runs out after dismounting the support arm (20); in order to hold the paper for the first turn and prevent it from slipping on the axis (21) a grip (27) is included on said axis to hold the paper on the axis.
